# EUROPEAN PATENT APPLICATION

(11) **EP 4 113 730 A1**
(43) Date of publication of application: **04.01.2023**
(21) Application number: 21759795.4
(22) Date of filing: 13.01.2021
(51) Int. Cl.: H01M 50/528, H01M 10/0585

(54) **COIN-SHAPED SECONDARY CELL**

(30) Priority: 27.02.2020 JP 2020031486
(71) Applicant: NGK Insulators, Ltd., Nagoya-shi, Aichi 467-8530 (JP)
(72) Inventor: KITAMURA, Kazumasa, Nagoya-shi, Aichi 467-8530 (JP); AWAKURA, Yasutaka, Nagoya-shi, Aichi 467-8530 (JP); TORISU, Tsuyoshi, Nagoya-shi, Aichi 467-8530 (JP)
(74) Representative: Müller-Boré & Partner Patentanwälte PartG mbB
(86) International application number: PCT/JP2021/000869
(87) International publication number: WO 2021/171811

(57) **Abstract**

A coin-type secondary battery (1) includes a positive electrode (2), a negative electrode (3), an electrolyte layer (4), an outer case (5), and a conductive elastic member (7). The positive electrode (2) and the negative electrode (3) are arranged in the up-down direction. The electrolyte layer (4) is provided between the positive electrode (2) and the negative electrode (3). The outer case (5) has an enclosed space that houses the positive electrode (2), the negative electrode (3), and the electrolyte layer (4). The elastic member (7) is arranged, while being compressed in the up-down direction, between one of the positive electrode (2) and the negative electrode (3) and a flat plate portion of the outer case (5). The elastic member (7) provides a direct or indirect electrical connection between the one electrode and the flat plate portion. The elastic member (7) includes a plurality of projections projecting in the up-down direction. The projections include a first projection and a second projection different in yield margin from the first projection, the yield margin being a difference between compressive stress and yield stress acting in the up-down direction. This configuration extends the life of the coin-type secondary battery (1).

## Description

### Technical Field

The present invention relates to a coin-type secondary battery.

### Cross-Reference to Related Application

This application claims priority benefit of Japanese Patent Application No. JP2020-031486 filed in the Japan Patent Office on February 27, 2020, the entire disclosures of which are incorporated herein by reference.

### Background Art

Coin-type secondary batteries having various structures have been used conventionally. For example, Japanese Patent Application Laid-Open No. 2017-195129 (Document 1) discloses a lithium secondary battery that includes a spring between a top plate in a negative electrode case and a negative electrode and provides an electrical connection via this spring between the top plate and the negative electrode.

Meanwhile, Japanese Patent Application Laid-Open No. 2012-197824 (Document 2) discloses a technique used in a fused-salt battery that includes a fused-salt battery body in which positive electrodes and negative electrodes are laminated alternately. According to this technique, a ring-shaped flat spring in which mountain folds and valley folds are repeatedly formed like an accordion in the circumferential direction is provided between the fused-salt battery body and the inner surface of a container and biases the fused-salt battery body in the direction of lamination.

In the coin-type secondary battery as disclosed in Document 1, since the storage space of the spring has a small height, the spring is compressed by a large amount in the up-down direction in the process of manufacturing the coin-type secondary battery. In the case where the amount of displacement caused by compression is large as described above, the use of a spring having a shape as disclosed in Document 2 may cause the mountain and valley folds of the spring to yield in the manufacturing process and may lower conductivity between the top plate of the negative electrode case and negative electrode. Even if the spring does not yield in the manufacturing process, each of the mountain and valley folds arranged in the outer circumference of the battery may yield in a relatively early stage due to a change over time and may shorten the life of the coin-type secondary battery.

### Summary of Invention

The present invention is intended for a coin-type secondary battery, and it is an object of the present invention to extend the life of the coin-type secondary battery.

A coin-type secondary battery according to a preferable embodiment of the present invention includes a positive electrode and a negative electrode that are arranged in an up-down direction, an electrolyte layer provided between the positive electrode and the negative electrode, an outer case having an enclosed space that houses the positive electrode, the negative electrode, and the electrolyte layer, and a conductive elastic member that is arranged, while being compressed in the up-down direction, between one electrode out of the positive electrode and the negative electrode and a flat plate portion of the outer case and that provides a direct or indirect electrical connection between the one electrode and the flat plate portion. The elastic member includes a plurality of projections that project in the up-down direction. The plurality of projections includes a first projection, and a second projection that is different in yield margin from the first projection, the yield margin being a difference between compressive stress and yield stress that act in the up-down direction.

According to the present invention, it is possible to extend the life of the coin-type secondary battery.

Preferably, the first projection and the second projection are different in an amount of vertical displacement from each other, the amount of vertical displacement being an amount of displacement in the up-down direction caused by compression between the one electrode and the flat plate portion.

Preferably, the first projection and the second projection are different in spring constant in the up-down direction from each other.

Preferably, a difference in the spring constant between the first projection and the second projection depends on a difference in width between the first projection and the second projection.

Preferably, a difference in the spring constant between the first projection and the second projection depends on a difference in plate thickness between the first projection and the second projection.

Preferably, a difference in the spring constant between the first projection and the second projection depends on a difference in Young's modulus between the first projection and the second projection, and the difference in Young's modulus between the first projection and the second projection depends on a difference in surface roughness between the first projection and the second projection.

Preferably, a difference in the spring constant between the first projection and the second projection depends on a difference in curvature between the first projection and the second projection.

Preferably, the plurality of projections include three or more projections arranged in a predetermined direction of arrangement that is parallel to one radial direction, and either one of the first projection and the second projection that has a larger yield margin is a projection other than projections that are located at both ends in the direction of arrangement among the plurality of projections.

Preferably, the plurality of projections are arranged in a predetermined direction of arrangement that is parallel to one radial direction, and each of the plurality of projections extends linearly in a direction perpendicular to the direction of arrangement.

Preferably, at least one of the plurality of projections has a flat portion at the top, the flat portion being perpendicular to the up-down direction and welded to the flat plate portion.

Preferably, the plurality of projections have the same height while being in a free state.

These and other objects, features, aspects and advantages of the present invention will become more apparent from the following detailed description of the present invention when taken in conjunction with the accompanying drawings.

### Brief Description of Drawings

Fig. 1 is a sectional view of a coin-type secondary battery according to a first embodiment;
Fig. 2 is a plan view of an elastic member;
Fig. 3 is a sectional view of the elastic member;
Fig. 4 is a sectional view of an area in the vicinity of the elastic member in enlarged dimensions;
Fig. 5 is a sectional view of an area in the vicinity of an elastic member of a coin-type secondary battery according to a second embodiment in enlarged dimensions;
Fig. 6 is a plan view of the elastic member;
Fig. 7 is a sectional view of the elastic member;
Fig. 8 is a plan view of another elastic member;
Fig. 9 is a sectional view of the elastic member;
Fig. 10 is a sectional view of an area in the vicinity of the elastic member in enlarged dimensions;
Fig. 11 is a plan view of another elastic member;
Fig. 12 is a sectional view of the elastic member;
Fig. 13 is a sectional view of an area in the vicinity of the elastic member in enlarged dimensions;
Fig. 14 is a plan view of another elastic member;
Fig. 15 is a sectional view of the elastic member;
Fig. 16 is a sectional view of an area in the vicinity of the elastic member in enlarged dimensions;
Fig. 17 is a plan view of another elastic member;
Fig. 18 is a sectional view of the elastic member;
Fig. 19 is a sectional view of an area in the vicinity of the elastic member in enlarged dimensions;
Fig. 20 is a perspective view of another elastic member; and
Fig. 21 illustrates a height of the elastic member at each circumferential position.

### Description of Embodiments

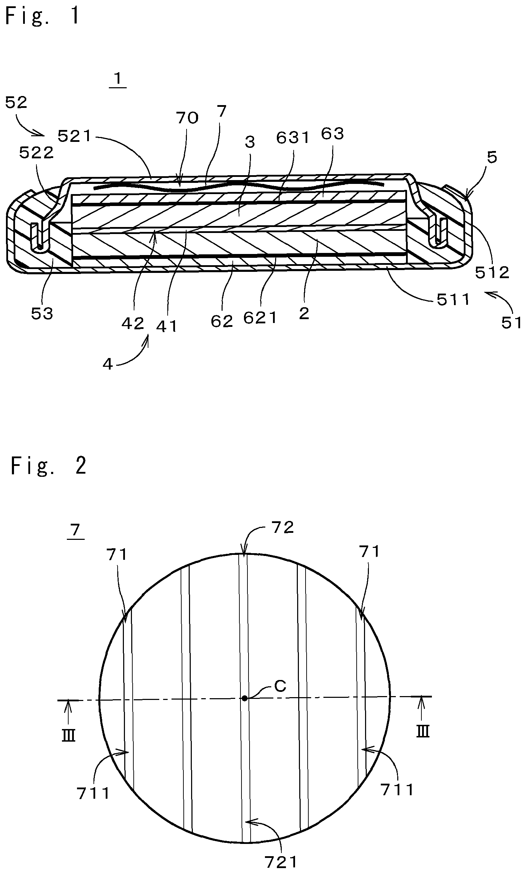

Fig. 1 is a sectional view illustrating a configuration of a coin-type secondary battery 1 according to a first embodiment of the present invention. The coin-type secondary battery 1 may, for example, be a battery for reflow soldering. The coin-type secondary battery 1 is electrically connected to and mounted on an object such as a wiring board by reflow soldering. This produces a battery-equipped device that includes the coin-type secondary battery 1. In the following description, the up-down direction in Fig. 1 is also simply referred to as the "up-down direction." The up-down direction does not necessarily have to match the direction of gravity during actual use of the coin-type secondary battery 1.

The coin-type secondary battery 1 includes a positive electrode 2, a negative electrode 3, an electrolyte layer 4, an outer case 5, a positive current collector 62, a negative current collector 63, and an elastic member 7. The electrolyte layer 4 is provided between the positive electrode 2 and the negative electrode 3. The outer case 5 has an enclosed space therein. The positive electrode 2, the negative electrode 3, the electrolyte layer 4, the positive current collector 62, the negative current collector 63, and the elastic member 7 are housed in this enclosed space.

The outer case 5 includes a positive can 51, a negative can 52, and a gasket 53. The positive can 51 has a flat plate portion 511 and a peripheral wall portion 512. The flat plate portion 511 has a generally disk-like shape. The peripheral wall portion 512 projects upward from the outer peripheral edge of the flat plate portion 511. The positive can 51 is a container that houses the positive electrode 2. The negative can 52 has a flat plate portion 521 and a peripheral wall portion 522. The flat plate portion 521 has a generally disk-like shape. The peripheral wall portion 522 projects downward from the outer peripheral edge of the flat plate portion 521. The negative can 52 has a container that houses the negative electrode 3.

In the coin-type secondary battery 1, the flat plate portion 511 of the positive can 51, the positive current collector 62, the positive electrode 2, the electrolyte layer 4, the negative electrode 3, the negative current collector 63, the elastic member 7, and the flat plate portion 521 of the negative can 52 are arranged in the order specified from the bottom side in Fig. 1. As will be described later, the positive current collector 62 and the negative current collector 63 may be omitted.

In the coin-type secondary battery 1, the negative can 52 and the positive can 51 are arranged facing each other such that the negative electrode 3 faces the positive electrode 2 with the electrolyte layer 4 sandwiched therebetween. The gasket 53 has insulating properties and is provided between the peripheral wall portion 512 of the positive can 51 and the peripheral wall portion 522 of the negative can 52. The positive can 51 and the negative can 52 each have a plate thickness of, for example, 0.075 to 0.25 mm. In this way, by using the positive can 51 and the negative can 52 that have relatively small plate thicknesses, it is possible to ensure a certain degree of thickness of the positive electrode 2 and the negative electrode 3 in the coin-type secondary battery 1 and to increase the capacity of the battery.

The elastic member 7 is a conductive plate member having flexibility. The elastic member 7 illustrated in Fig. 1 is a metal flat spring (also referred to as a "disc spring"). The elastic member 7 has a generally circular outside shape in plan view. The details of the shape of the elastic member 7 will be described later. The elastic member 7 is made of, for example, stainless steel. The elastic member 7 may be made of other metals (e.g., aluminum), and may be made of a conductive material other than metals (e.g., conductive resins). The elastic member 7 may have through holes as necessary in the central portion in the radial direction.

The elastic member 7 is sandwiched between the negative current collector 63 and the flat plate portion 521 of the negative can 52. The elastic member 7 and the negative current collector 63 are arranged between the negative electrode 3 and the flat plate portion 521 of the negative can 52. The elastic member 7 deforms elastically upon receiving forces from the flat plate portion 521 of the negative can 52, the negative current collector 63, and the negative electrode 3, and is compressed in the up-down direction. The elastic member 7 provides an indirect electrical connection via the negative current collector 63 between the negative electrode 3 and the flat plate portion 521 of the negative can 52. The flat plate portion 521 and each of the negative electrode 3 and the negative current collector 63 are approximately parallel to each other.

The negative current collector 63 may be omitted from the coin-type secondary battery 1. In the case where the negative current collector 63 is omitted, the elastic member 7 is arranged, while being compressed, between the negative electrode 3 and the flat plate portion 521 of the negative can 52 and comes in direct contact with the negative electrode 3. The elastic member 7 provides a direct electrical connection between the negative electrode 3 and the flat plate portion 521 of the negative can 52. In this way, the elastic member 7 is in direct or indirect contact with the negative electrode 3 to provide a direct or indirect electrical connection between the negative electrode 3 and the flat plate portion 521 of the negative can 52. Note that the positive current collector 62 may also be omitted, because the forces from the elastic member 7 act also on the side of the positive electrode 2.

When the coin-type secondary battery 1 is fixedly mounted on an object such as a wiring board, for example, the coin-type secondary battery 1 is soldered to the object by reflow soldering. At this time, the coin-type secondary battery 1 is heated at a high temperature for a predetermined period of time, and accordingly, the pressure inside the outer case 5 increases. In the coin-type secondary battery 1, the presence of the elastic member 7 ensures conductivity between the negative electrode 3 and the negative can 52 and conductivity between the positive electrode 2 and the positive can 51 even if the outer case 5 expands.

The positive can 51 and the negative can 52 illustrated in Fig. 1 are made of metal. For example, the positive can 51 and the negative can 52 may be formed by subjecting a metal plate such as a stainless steel plate or an aluminum plate to press working (drawing). Note that the flat plate portions 511 and 521 and the peripheral wall portions 512 and 522 of the positive can 51 and the negative can 52 may be formed by any other method as long as the outer case 5 realizes an enclosed space.

During manufacture of the coin-type secondary battery 1 in Fig. 1, the peripheral wall portion 512 of the positive can 51 is arranged outside the peripheral wall portion 522 of the negative can 52. Then, a downward load is applied to the flat plate portion 521 of the negative can 52, so that the peripheral wall portion 512 of the positive can 51 is plastically deformed inward in the radial direction while the elastic member 7 is compressed in the up-down direction. In this way, it is possible to fix the positive can 51 to the negative can 52 via the gasket 53 by caulking the peripheral wall portion 512 of the positive can 51. This forms the enclosed space described above.

The area of the flat plate portion 511 of the positive can 51 is larger than the area of the flat plate portion 521 of the negative can 52. The outer periphery of the peripheral wall portion 512 of the positive can 51 is also larger than the outer periphery of the peripheral wall portion 522 of the negative can 52. Since the outer peripheral surface of the peripheral wall portion 522 of the negative can 52 is covered with the gasket 53, the peripheral wall portion 522 of the negative can 52 is only slightly exposed to the outside air. The gasket 53 is a ring-shaped member arranged between the peripheral wall portions 512 and 522. The gasket 53 is also filled in, for example, between the peripheral wall portion 522 and the positive electrode 2. The gasket 53 may be made of an insulating resin such as polypropylene, polytetrafluoroethylene, polyphenylene sulfide, perfluoroalkoxy alkane, or polychlorotrifluoroethylene. Among these resins, it is preferable to use polyphenylene sulfide or perfluoroalkoxy alkane that has excellent heat resistance. The gasket 53 may be a member made of other insulating materials.

The thickness of the coin-type secondary battery 1, i.e., the distance between the outer surface of the flat plate portion 511 of the positive can 51 and the outer surface of the flat plate portion 521 of the negative can 52, may for example be greater than or equal to 0.7 mm and less than or equal to 1.6 mm. In order to achieve a reduction in the thickness of a circuit board assembly with the coin-type secondary battery 1 mounted thereon, which will be described later, the upper-limit value for the thickness of the coin-type secondary battery 1 is preferably 1.4 mm and more preferably 1.2 mm. From the viewpoint of ensuring a certain degree of thickness of the positive electrode 2 and the negative electrode 3 and increasing the capacity of the battery, the lower limit value for the thickness of the coin-type secondary battery 1 is preferably 0.8 mm and more preferably 0.9 mm.

The coin-type secondary battery 1 has, for example, a diameter greater than or equal to 10 mm and less than or equal to 20 mm. The diameter of the coin-type secondary battery 1 in Fig. 1 corresponds to the diameter of the flat plate portion 511 of the positive can 51. To achieve a reduction in the size of the battery-equipped device with the coin-type secondary battery 1 mounted thereon, the upper-limit value for the diameter of the coin-type secondary battery 1 is preferably 18 mm and more preferably 16 mm. From the viewpoint of ensuring a certain degree of thickness of the positive electrode 2 and the negative electrode 3 and increasing the capacity of the battery, the lower limit value for the diameter of the coin-type secondary battery 1 is preferably 10.5 mm and more preferably 11 mm.

As will be described later, the preferable coin-type secondary battery 1 uses a lithium-composite-oxide sintered plate as the positive electrode 2 and a titanium-containing sintered plate as the negative electrode 3. This achieves a coin-type lithium secondary battery that has excellent heat resistance, has high capacity and high power while being slim and compact, and is chargeable at constant voltage (CV).

The positive electrode 2 may, for example, be a sintered plate (i.e., plate sintered compact). The positive electrode 2 formed of a sintered compact means that the positive electrode 2 includes neither binders nor conductive assistants. This is because even if green sheet includes a binder, this binder will disappear or will be burnt during firing. The positive electrode 2 formed of a sintered compact has improved heat resistance. Besides, the positive electrode 2 that includes no binders can avoid deterioration caused by an electrolytic solution 42, which will be described later. It is preferable that the positive electrode 2 is porous, i.e., the positive electrode 2 has pores.

The preferable positive electrode 2 is a lithium-composite-oxide sintered plate. In particular, the lithium composite oxide may preferably be a lithium cobalt oxide (typically LiCoO₂; hereinafter abbreviated as "LCO"). It is preferable that the lithium-composite-oxide sintered plate described above is an oriented positive electrode plate that contains a plurality of primary particles of a lithium composite oxide and that is oriented to the plate surface of the positive electrode at an average orientation angle greater than or equal to 0 degrees and less than or equal to 30 degrees.

The thickness of the positive electrode 2 is preferably in the range of 60 µm to 450 µm, more preferably in the range of 70 µm to 350 µm, and more preferably in the range of 90 µm to 300 µm. The positive electrode 2 having a thickness within this range can increase the capacity of the active material per unit area, can improve the energy density of the coin-type secondary battery 1, and can also suppress deterioration in battery characteristics accompanied by repeated charging and discharging (in particular, an increase of the resistance value).

The negative electrode 3 may, for example, be a sintered plate (i.e., plate sintered compact). The negative electrode 3 formed of a sintered compact means that the negative electrode 3 includes neither binders nor conductive assistants. This is because even if green sheet includes a binder, this binder will disappear or will be burnt during firing. The negative electrode 3 formed of a sintered compact has improved heat resistance. Moreover, the negative electrode 3 that includes no binders but has the increased packing density of the negative active material (e.g., LTO or Nb₂TiO₇, which will be described later) can achieve high capacity and excellent charging/discharging efficiency. It is preferable that the negative electrode 3 is porous, i.e., the negative electrode 3 has pores.

The preferable negative electrode 3 is a titanium-containing sintered plate. The titanium-containing sintered plate preferably contains lithium titanate Li₄Ti₅O₁₂ (hereinafter referred to as "LTO") or a niobium titanium composite oxide Nb₂TiO₇, and more preferably contains LTO. Note that LTO is typically known to have a spinel structure, but may also adopt other structures during charging and discharging. For example, reactions may progress as a result of two-phase coexistence of Li₄Ti₅O₁₂ (spinel structure) and Li₇Ti₅O₁₂ (rock-salt structure) as LTO during charging and discharging. Thus, LTO is not limited to the spinel structure. The titanium-containing sintered plate described above has a structure in which a plurality of (i.e., numerous) primary particles are coupled together. Accordingly, it is preferable that these primary particles are formed of LTO or Nb₂TiO₇.

The thickness of the negative electrode 3 is preferably in the range of 70 µm to 500 µm, more preferably in the range of 85 µm to 400 µm, and yet more preferably in the rage of 95 µm to 350 µm. As the thickness of the LTO sintered compact plate increases, it is more likely to be able to achieve a battery with high capacity and high energy density. The thickness of the negative electrode 3 may be obtained by, for example, measuring the distance between plate surfaces that are observed as being approximately parallel to each other when a section of the negative electrode 3 is observed using a scanning electron microscopy (SEM).

In the coin-type secondary battery 1 illustrated in Fig. 1, the electrolyte layer 4 includes a separator 41 and an electrolytic solution 42. The separator 41 is provided between the positive electrode 2 and the negative electrode 3. The separator 41 is porous and primarily impregnated with the electrolytic solution 42. When the positive electrode 2 and the negative electrode 3 are both porous, the positive electrode 2 and the negative electrode 3 are also impregnated with the electrolytic solution 42. The electrolytic solution 42 may exist in clearances between the outer case 5 and each constituent element including the positive electrode 2, the negative electrode 3, and the separator 41.

The separator 41 may preferably be made of cellulose or ceramic. The cellulose separator has the advantage in low cost and excellent heat resistance. Unlike widely used polyolefin separators that are inferior in heat resistance, the cellulose separator is excellent not only in its heat resistance but also in its wettability to γ-butyrolactone (GBL), which is an electrolytic component having excellent heat resistance. Thus, in the case of using an electrolytic solution containing GBL, it is possible to impregnate the separator enough with the electrolytic solution (without rejecting the electrolytic solution). On the other hand, the ceramic separator has the advantage not only in excellent heat resistance but also in being able to produce a single integrated sintered compact as a whole by integrating the positive electrode 2 and the negative electrode 3 together. In the case of the ceramic separator, ceramic forming the separator is preferably at least one type selected from among MgO, Al₂O₃, ZrO₂, SiC, Si₃N₄, AlN, and cordierite, and more preferably at least one type selected from among MgO, Al₂O₃, and ZrO₂.

There are no particular limitations on the electrolytic solution 42, and in the case where the coin-type secondary battery 1 is a lithium secondary battery, a commercially available electrolytic solution for lithium battery may be used, such as a solution obtained by dissolving lithium salt in a nonaqueous solvent such as an organic solvent. In particular, an electrolytic solution with excellent heat resistance is preferable, and such an electrolytic solution more preferably contains lithium borofluoride (LiBF₄) in a nonaqueous solvent. In this case, a preferable nonaqueous solvent is at least one type selected from the group consisting of γ-butyrolactone (GBL), ethylene carbonate (EC), and propylene carbonate (PC), more preferably a mixed solvent of EC and GBL, a single solvent of PC, a mixed solvent of PC and GBL, or a single solvent of GBL, and in particular preferably a mixed solvent of EC and GBL or a single solvent of GBL.

A nonaqueous solvent has a higher boiling point as a result of containing γ-butyrolactone (GBL), and this brings about a considerable improvement in heat resistance. From this viewpoint, the volume ratio of EC and GBL in an EC- and/or GBL-containing nonaqueous solvent is preferably in the range of 0:1 to 1:1 (GBL ratio of 50% by volume to 100% by volume), more preferably in the range of 0:1 to 1:1.5 (GBL ratio of 60% by volume to 100% by volume), yet more preferably in the range of 0:1 to 1:2 (GBL ratio of 66.6% by volume to 100% by volume), and in particular preferably in the range of 0:1 to 1:3 (GBL ratio of 75% by volume to 100% by volume). Lithium borofluoride (LiBF₄) dissolved in the nonaqueous solvent is an electrolyte having a high decomposition temperature, and this also brings about a considerable improvement in heat resistance. The LiBF₄ concentration in the electrolytic solution 42 is preferably in the range of 0.5 mol/L to 2 mol/L, more preferably in the range of 0.6 mol/L to 1.9 mol/L, yet more preferably in the range of 0.7 mol/L to 1.7 mol/L, and in particular preferably in the range of 0.8 mol/L to 1.5 mol/L.

The electrolytic solution 42 may further contain, as an additive, vinylene carbonate (VC) and/or fluoroethylene carbonate (FEC) and/or vinylethylene carbonate (VEC). VC and FEC are both excellent in heat resistance. Therefore, as a result of the electrolytic solution 42 containing the additive as described above, it is possible to form an SEI membrane with excellent heat resistance on the surface of the negative electrode 3.

In the case where the coin-type secondary battery 1 includes the positive current collector 62 and/or the negative current collector 63, there are no particular limitations on the materials and shapes of these current collectors, but the current collectors are preferably metal foil such as coper foil or aluminum foil. Besides, from the viewpoint of reducing contact resistance, it is preferable to provide the positive carbon layer 621 between the positive electrode 2 and the positive current collector 62. Similarly, from the viewpoint of reducing contact resistance, it is preferable to provide the negative carbon layer 631 between the negative electrode 3 and the negative current collector 63. Both of the positive carbon layer 621 and the negative carbon layer 631 are preferably formed of conductive carbon, and may be formed by, for example, applying a conductive carbon paste by screen printing or any other method. As another method, metal or carbon may be formed by sputtering on electrode collecting surfaces. Examples of the metal spices include Au, Pt, and Al.

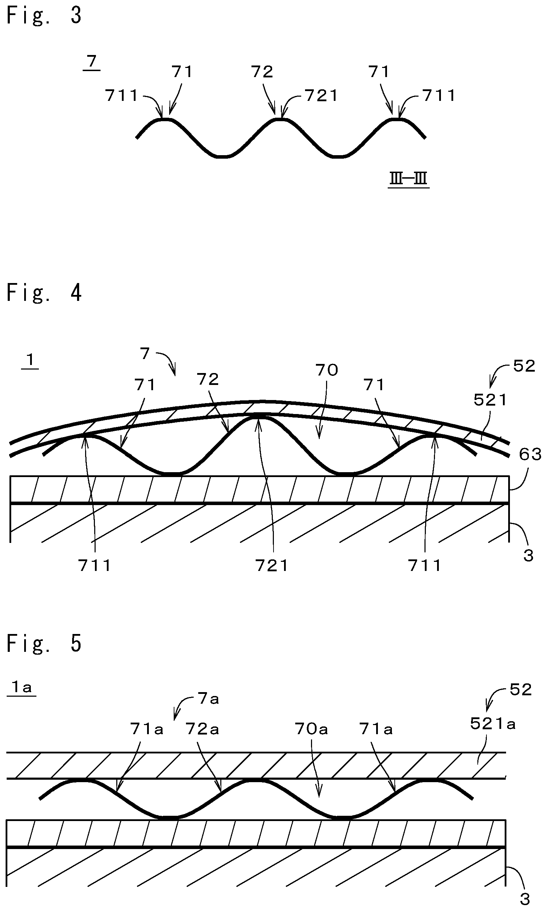

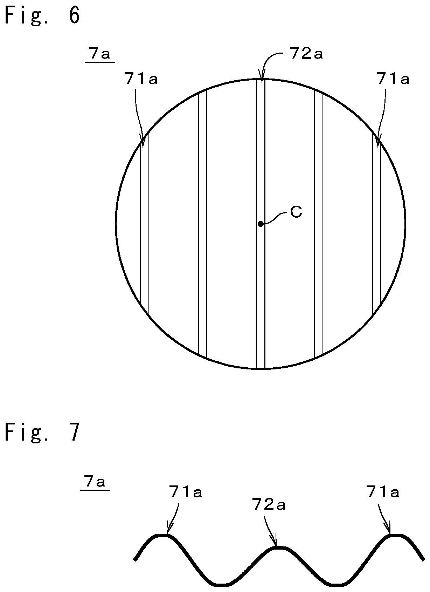

Fig. 2 is a plan view of the elastic member 7. Fig. 3 is a sectional view of the elastic member 7, taken along at a position III-III in Fig. 2. Figs. 2 and 3 illustrate a free state in which the elastic member 7 is neither compressed nor extended (the same applies to Figs. 6 to 9, 11, 12, 14, 15, 17, 18, 20, and 21). The elastic member 7 has a generally circular outside shape about a center C in plan view. In the following description, the direction that extends in the right-left direction in parallel with the diameter and passing through the center C in Fig. 2 is referred to as a "first radial direction." The direction that extends in the up-down direction in parallel with the diameter and passing through the center C in Fig. 2 is referred to as a "second radial direction." The second radial direction is orthogonal to the first radial direction. The elastic member 7 has a plurality of projections 71 and 72 that project in the up-down direction. These projections 71 and 72 are elastically deformable in the up-down direction. In the illustration in Fig. 3, the height of the elastic member 7 in the up-down direction is more emphasized than the actual height (the same applies to Figs. 7, 9, 12, 15, 18, and 20)

The diameter of the elastic member 7 in plan view is, for example, greater than or equal to 9.900 mm and less than or equal to 19.850 mm, preferably greater than or equal to 9.900 mm and less than or equal to 17.815 mm, and more preferably greater than or equal to 9.900 mm and less than or equal to 17.600 mm. The thickness of a metal plate forming the elastic member 7 (hereinafter, also simply referred to as the "plate thickness of the elastic member 7") is, for example, greater than or equal to 0.027 mm and less than or equal to 0.103 mm, preferably greater than or equal to 0.047 mm and less than or equal to 0.083 mm, and more preferably greater than or equal to 0.047 mm and less than or equal to 0.053 mm. In the example illustrated in Figs. 2 and 3, the plate thickness of the elastic member 7 is approximately the same throughout the entire surface of the elastic member 7.

The free height of the elastic member 7 (i.e., the height in the up-down direction in a free state in which the elastic member 7 is neither compressed nor extended) is, for example, greater than or equal to 0.054 mm and less than or equal to 0.900 mm, preferably greater than or equal to 0.190 mm and less than or equal to 0.620 mm, and more preferably greater than or equal to 0.190 mm and less than or equal to 0.290 mm. The surface roughness of the elastic member 7 is greater than or equal to 1.0 µm and less than or equal to 30.0 µm, and preferably greater than or equal to 3.0 µm and less than or equal to 10.0 µm. This surface roughness refers to center line average roughness (Ra), and the same applies to the following description. In the example illustrated in Figs. 2 and 3, the surface roughness of the elastic member 7 is approximately the same throughout the entire surface of the elastic member 7.

In the following description, the projections 71 and 72 of the elastic member 7 are respectively referred to as "first projections 71" and "second projections 72." In the example illustrated in Fig. 3, the elastic member 7 includes two first projections 71 and one second projection 72 that project upward. The two first projections 71 and the one second projection 72 are alternately arranged in a predetermined direction of arrangement that is approximately parallel to the first radial direction. In other words, the two first projections 71 are arranged adjacent to one another on both sides of the second projection 72 in the direction of arrangement. The two first projections 71 are arranged adjacent to the second projection 72 on both side of the second projection 72 in the direction of arrangement, and the second projection 72 is arranged in the center C of the elastic member 7 between the two first projections 71.

The first projections 71 and the second projection 72 each extend approximately linearly in the second radial direction (i.e., the direction approximately perpendicular to the direction of arrangement). In other words, the elastic member 7 is a corrugated plate that includes the three linear projections 71 and 72 arranged in the direction of arrangement that is approximately perpendicular to the longitudinal direction of the projections 71 and 72. Each of the first projections 71 and the second projection 72 of this corrugated plate corresponds to a so-called "mountain portion," and a portion between each pair of the first projections 71 and the second projection 72 corresponds to a so-called "valley portion." Each first projection 71 extends in the longitudinal direction from one part of the peripheral edge of the generally disk-like elastic member 7 to another part of the peripheral edge of the elastic member 7 that is located at a position opposing the one part in the longitudinal direction. The same applies to the second projection 72.

Note that the number of first projections 71 of the elastic member 7 may be one or may be three or more, and the number of second projections 72 may be two or more. The elastic member 7 may have three or more projections 71 and 72 arranged in the aforementioned direction of arrangement. In this case, the first projections 71 and the second projections 72 do not necessarily have to be arranged alternatively, and the first projections 71 may be adjacent to each other in the direction of arrangement and/or the second projections 72 may be adjacent to each other in the direction of arrangement.

In the example illustrated in Figs. 2 and 3, each of the first projections 71 and the second projection 72 has approximately the same width in the direction of arrangement. In the following description, the direction of arrangement is also referred to as a "width direction." Each of the first projections 71 and the second projection 72 has approximately the same height in the up-down direction while being in a free state (i.e., free height). Each of the first projections 71 and the second projection 72 also has approximately the same plate thickness and approximately the same surface roughness.

Each first projection 71 has a flat portion 711 at the top (i.e., the upper end), the flat portion being approximately perpendicular to the up-down direction. The flat portion 711 is provided along approximately the entire length in the longitudinal direction (i.e., second radial direction) of the first projection 71. The width of the flat portion 711 in the first radial direction is approximately constant throughout the entire length in the longitudinal direction. The second projection 72 has a flat portion 721 at the top (i.e., the upper end), the flat portion being approximately perpendicular to the up-down direction. The flat portion 721 is provided along approximately the entire length in the longitudinal direction (i.e., second radial direction) of the first projection 72. The width of the flat portion 721 in the first radial direction is approximately constant throughout the entire length in the longitudinal direction.

In the manufacture of the coin-type secondary battery 1, before the negative can 52 is provided on the positive can 51, at least one of the flat portions of the elastic member 7 (e.g., the flat portion 721 of the second projection 72), among the flat portions 711 of the two first projections 71 and the flat portion 721 of the second projection 72, are welded and fixed to the flat plate portion 521 of the negative can 52. This allows the negative can 52 and the elastic member 7 to be handled together and thereby simplifies the manufacture of the coin-type secondary battery 1. Note that it is possible to omit a flat portion that is not welded to the flat plate portion 521 of the negative can 52, among the flat portions 711 and 721.

The curvature of the upper end of each first projection 71 (i.e., the curvature of the top when it is assumed that the flat portion 711 is not provided) is approximately the same as the curvature of the upper end of the second projection 72 (i.e., the curvature of the top when it is assumed that the flat portion 721 is not provided). In the following description, the curvatures of the upper ends of the first projections 71 and second projection 72 are simply referred to as "curvatures." In the case where the flat portion 711 is omitted from each first projection 71, the curvature of the first projection 71 is the curvature of the actual top of the first projection 71. The same applies to the curvature of the second projection 72.

Fig. 4 is a sectional view of an area in the vicinity of the elastic member 7 of the coin-type secondary battery 1 in enlarged dimensions. In the illustration in Fig. 4, the height of the elastic member 7 in the up-down direction is more emphasized than the actual height (the same applies to Figs. 5, 10, 13, 16, and 19). In the example illustrated in Fig. 4, the flat plate portion 521 of the negative can 52 is formed of a member that is relatively thin and easy to deform elastically, and the center portion of the flat plate portion 521 in the radial direction heaves up from the peripheral edge. In other words, the flat plate portion 521 deforms such that its central portion in the radial direction protrudes upward. If the space between the lower surface of the flat plate portion 521 of the negative can 52 and the negative electrode 3 and the negative current collector 63 is referred to as an "elastic member space 70," the height of the radially central portion of the elastic member space 70 in the up-down direction is greater than the height of the peripheral edge portion of the elastic member space 70 in the up-down direction. In the illustration in Fig. 4, the deformation of the flat plate portion 521 in the up-down direction is more emphasized than the actual deformation.

As described above, the elastic member 7 is compressed and elastically deformed in the up-down direction between the negative electrode 3 and the flat plate portion 521 of the negative can 52, and the top of each of the first projections 71 and the second projection 72 is in contact with the flat plate portion 521 of the negative can 52. In the example illustrated in Fig. 4, the top of the second projection 72 located in the central portion in the width direction is located upward of the top of each first projection 71 located at the end in the width direction. That is, the amount of vertical displacement of the second projection 72 of the elastic member 7 (i.e., the amount of displacement in the up-down direction caused by the compression between the negative electrode 3 and the flat plate portion 521) is less than the amount of vertical displacement of the first projections 71. Thus, the difference between compressive stress acting on the second projection 72 and yield stress of the second projection 72 is greater than the difference between compressive stress acting on each first projection 71 and yield stress of the first projection 71. In the following description, the difference between compressive stress and yield stress acting on each of the projections 71 and 72 is also referred to as a "yield margin."

In the coin-type secondary battery 1, as described above, the yield margin of the second projection 72 is larger than the yield margin of each first projection 71. Thus, when the elastic member 7 yields due to factors such as a change of the coin-type secondary battery 1 over time, the two first projections 71 yield first, and the second projection 72 remains deformed elastically for some period of time. In other words, it is possible to shift the timing of yielding between the first projections 71 and the second projection 72. As a result, the electrical connection between the negative electrode 3 and the flat plate portion 521 of the negative can 52 can be maintained for a longer period of time than in the case where the first projections 71 and the second projection 72 have approximately the same yield margin and yield at approximately the same time. Accordingly, it is possible to extend the life of the coin-type secondary battery 1.

In the coin-type secondary battery 1, the elastic member 7 does not necessarily have to be arranged between the negative electrode 3 and the flat plate portion 521 of the negative can 52, and the elastic member 7 may be arranged between the flat plate portion 511 of the positive can 51 and each of the positive current collector 62 and the positive electrode 2. In this case, the elastic member 7 is deformed elastically and compressed in the up-down direction upon receiving forces from the flat plate portion 511 of the positive can 51, the positive current collector 62, and the positive electrode 2. The elastic member 7 provides an indirect electrical connection via the positive current collector 62 between the positive electrode 2 and the flat plate portion 511 of the positive can 51. In the case where the positive current collector 62 is omitted, the elastic member 7 provides a direct electrical connection between the positive electrode 2 and the flat plate portion 511 of the positive can 51. In either case, the flat plate portion 511 of the positive can 51 deforms in approximately the same manner as the flat plate portion 521 of the negative can 52 illustrated in Fig. 4, and the shape of the elastic member 7 is also approximately the same as the shape illustrated in Fig. 4. As a result, it is possible to extend the life of the coin-type secondary battery 1 as described above.

As described above, the coin-type secondary battery 1 includes the positive electrode 2, the negative electrode 3, the electrolyte layer 4, the outer case 5, and the conductive elastic member 7. The positive electrode 2 and the negative electrode 3 are arranged in the up-down direction. The electrolyte layer 4 is provided between the positive electrode 2 and the negative electrode 3. The outer case 5 has an enclosed space that houses the positive electrode 2, the negative electrode 3, and the electrolyte layer 4. The elastic member 7 is arranged, while being compressed in the up-down direction, between one electrode of the positive electrode 2 and the negative electrode 3 and the flat plate portion of the outer case 5 (i.e., the flat plate portion 511 or 521). The elastic member 7 provides a direct or indirect electrical connection between the one electrode and the flat plate portion. The elastic member 7 includes a plurality of projections that project in the up-down direction. These projections include the first projection 71 and the second projection 72 that is different in yield margin from the first projection 71, the yield margin being a difference between compressive stress and yield stress acting in the up-down direction.

Accordingly, when the elastic member 7 yields due to factors such as a change of the coin-type secondary battery 1 over time, it is possible to shift the timing of yielding between the first projection 71 and the second projection 72. In the example described above, the yield margin of the second projection 72 is larger than the yield margin of the first projection 71. Thus, the first projection 71 yield first, and the second projection 72 remains deformed elastically for some period of time. As a result, the electrical connection between the negative electrode 3 and the flat plate portion 521 of the negative can 52 and the electrical connection between the positive electrode 2 and the flat plate portion 511 of the positive can 51 can be maintained for a longer period of time than in the case where the first projection 71 and the second projection 72 have approximately the same yield margin and yield at approximately the same time. To be more specific, in the case where the coin-type secondary battery 1 is subjected to a change of operating temperature environments (including a change caused by charging and discharging), the first projection 71, which yield first, contribute enough to conductivity (i.e., the electrical connection between the negative electrode 3 and the flat plate portion 521 of the negative can 52 and the electrical connection between the positive electrode 2 and the flat plate portion 511 of the positive can 51) in the early stage of use of the coin-type secondary battery 1, but the degree of contribution of the first projection 71 to conductivity gradually becomes weak and decreases over time. However, the presence of the second projection 72, which yields later, in addition to the first projection 71 allows the elastic member 7 to ensure conductivity even if the elastic member 7 becomes unable to ensure conductivity with the first projection 71. Accordingly, it is possible to extend the life of the coin-type secondary battery 1.

As described above, in the coin-type secondary battery 1, the first projection 71 and the second projection 72 are different in the amount of vertical displacement from each other, the amount of vertical displacement being the amount of displacement in the up-down direction caused by the aforementioned compression between the one electrode and the flat plate portion. Thus, it is possible to easily vary the yield margin of the second projection 72 and the yield margin of the first projection 71. In the example described above, the amount of vertical displacement of the second projection 72 is less than the amount of vertical displacement of the first projection 71. Thus, it is possible to easily make the yield margin of the second projection 72 larger than the yield margin of the first projection 71. As a result, it is possible to extend the life of the coin-type secondary battery 1 without excessively complicating the structure of the coin-type secondary battery 1.

As described above, it is preferable that the plurality of projections described above include three or more projections that are arranged in a predetermined direction of arrangement that is parallel to one radial direction (in the above-described example, the first radial direction), and a projection that has a larger yield margin (in the above-described example, the second projection 72) among the first projections 71 and the second projection 72 is a projection other than the projections located at both ends in the direction of arrangement among the plurality of projections. Therefore, it is possible to increase the area of the projection that has a larger yield margin, as compared to the case in which the projection having a larger yield margin is located at the end in the direction of arrangement. Accordingly, even after a projection that has a smaller yield margin (in the above-described example, the first projections 71) has yielded due to factors such as a change of the coin-type secondary battery 1 over time, it is possible to maintain a relatively large area of contact between the flat plate portion described above and the elastic member 7. As a result, it is possible to improve long-term reliability of electrical connection (i.e., the electrical connection between the negative electrode 3 and the flat plate portion 521 and the electrical connection between the positive electrode 2 and the flat plate portion 511) in the coin-type secondary battery 1. The same applies to coin-type secondary batteries 1 that include elastic members 7a to 7e, which will be described later.

As described above, it is preferable that the plurality of projections described above (i.e., the first projections 71 and the second projection 72) are arranged in a predetermined direction of arrangement that is parallel to one radial direction (in the above-described example, the first radial direction), and each of the projections extends linearly in the direction perpendicular to the direction of arrangement. This simplifies the shape of the elastic member 7. As a result, it is possible to facilitate the manufacture of the coin-type secondary battery 1. The same applies to the coin-type secondary batteries 1 that include the elastic members 7a to 7e, which will be described later.

As described above, it is preferable that at least one of the plurality of projections described above (i.e., the first projections 71 and the second projection 72) has a flat portion (i.e., the flat portion 711 or 721) at the top, the flat portion being perpendicular to the up-down direction and welded to the flat plate portion described above (i.e., the flat plate portion 511 or 521 of the outer case 5). This increases the area of the portion of the elastic member 7 that is welded to the outer case 5 and suppresses stress concentration on the welded portion. Besides, it is possible to bond the elastic member 7 and the outer case 5 while suppressing a reduction in the strength of the elastic member 7 caused by sputtering or other factors. The same applies to the coin-type secondary batteries 1 that include the elastic members 7a to 7d, which will be described later.

As described above, it is preferable in the coin-type secondary battery 1 that the plurality of projections (i.e., the first projections 71 and the second projection 72) have the same height while being in a free state. This simplifies the shape of the elastic member 7. As a result, it is possible to facilitate the manufacture of the coin-type secondary battery 1. The same applies to the coin-type secondary batteries 1 that include the elastic members 7b to 7e, which will be described later.

Next, a coin-type secondary battery 1a according to a second embodiment of the present invention will be described. Fig. 5 is a sectional view of an area in the vicinity of an elastic member 7a of the coin-type secondary battery 1a in enlarged dimensions. The coin-type secondary battery 1a includes, instead of the elastic member 7 illustrated in Figs. 2 and 3, the elastic member 7a that is different in structure from the elastic member 7. The negative can 52 has a flat plate portion 521a formed of a material that is relatively thick and difficult to deform elastically, and the flat plate portion 521a expands approximately perpendicular to the up-down direction. Thus, the height of an elastic member space 70a is approximately constant throughout the entire space. The other configuration of the coin-type secondary battery 1a is similar to the configuration of the coin-type secondary battery 1, and corresponding constituent elements are given the same reference signs in the following description.

Figs. 6 and 7 are respectively a plan view and a sectional view of the elastic member 7a. Like the elastic member 7, the elastic member 7a is a generally circular flat spring in plan view. The elastic member 7a includes two first projections 71a and one second projection 72a. Like the first projections 71 described above, the two first projections 71a are located at both ends in the direction of arrangement (i.e., the first radial direction described above). Like the second projection 72 described above, the second projection 72a is arranged in the center C of the elastic member 7a between the two first projections 71a. Each of the first projections 71a and the second projection 72a extends approximately linearly in the second radial direction described above (i.e., the direction approximately perpendicular to the direction of arrangement). The first projections 71a and the second projection 72a have approximately the same width in the direction of arrangement. The first projections 71a and the second projection 72a also have approximately the same plate thickness and approximately the same surface roughness.

In the elastic member 7a, the first projections 71a and the second projection 72a are different in free height from each other. In the example illustrated in Fig. 7, the free height of each first projection 71a is greater than the free height of the second projection 72a. Thus, in the case where the height of the elastic member space 70a is constant throughout the entire space as illustrated in Fig. 5, the amount of vertical displacement of each first projection 71a of the elastic member 7a, which is housed in the elastic member space 70a, is greater than the amount of vertical displacement of the second projection 72a. Accordingly, the yield margin (i.e., the difference between compressive stress and yield stress acting in the up-down direction) on the second projection 72a is larger than the yield margin of the first projections 71a.

In the coin-type secondary battery 1a, the elastic member 7a does not necessarily have to be arranged between the negative electrode 3 and the flat plate portion 521a of the negative can 52, and may be arranged between the positive electrode 2 and the flat plate portion 511 of the positive can 51 (see Fig. 1). In this case, the elastic member 7a provides a direct or indirect electrical connection between the positive electrode 2 and the flat plate portion 511 of the positive can 51 while being compressed in the up-down direction. Since the flat plate portion 511 of the positive can 51 is approximately perpendicular to the up-down direction in approximately the same manner as the flat plate portion 521a of the negative can 52 illustrated in Fig. 5, the elastic member 7a has approximately the same shape as the shape illustrated in Fig. 5.

As described above, in the coin-type secondary battery 1a, like in the coin-type secondary battery 1, the elastic member 7a includes a plurality of projections that project in the up-down direction, and these projections include the first projection 71a and the second projection 72a different in yield margin from the first projection 71a. Accordingly, when the elastic member 7a yield due to factors such as a change of the coin-type secondary battery 1a over time, it is possible to shift the timing of yielding between the first projection 71a and the second projection 72a. In the example descried above, the first projection 71a yield first, and the second projection 72a remains deformed elastically for some period of time. As a result, it is possible to maintain the electrical connection between the negative electrode 3 and the flat plate portion 521a of the negative can 52 and the electrical connection between the positive electrode 2 and the flat plate portion 511 of the positive can 51 (see Fig. 1) for a longer period of time than in the case where the first projection 71a and the second projection 72a have approximately the same yield margin and yield at approximately the same time. Accordingly, it is possible to extend the life of the coin-type secondary battery 1a.

As described above, in the coin-type secondary battery 1a, the first projection 71a and the second projection 72a are different in the amount of vertical displacement from each other. Thus, it is possible to easily vary the yield margin of the second projection 72a and the yield margin of the first projection 71a. In the above-described example, the amount of vertical displacement of the second projection 72a is less than the amount of vertical displacement of the first projection 71a. Thus, it is possible to easily make the yield margin of the second projection 72a larger than the yield margin of the first projection 71a. As a result, it is possible to extend the life of the coin-type secondary battery 1a without excessively complicating the structure of the coin-type secondary battery 1a.

Note that the elastic member 7a may be arranged in the elastic member space 70, which has a greater height in the radially central portion, in the coin-type secondary battery 1 (see Fig. 1). In this case as well, the amount of vertical displacement of the second projection 72a is less than the amount of vertical displacement of the first projections 71a. Since the yield margin of the second projection 72a is larger than the yield margin of the first projections 71a, the first projections 71a yield first, and the second projection 72a remains deformed elastically for some period of time.

In the elastic member 7a, the free height of the second projection 72a may be greater than the free height of each first projections 71a. In this case, in the elastic member 7a housed in the elastic member space 70a (see Fig. 5) of the coin-type secondary battery 1a, the amount of vertical displacement of the second projection 72a is greater than the amount of vertical displacement of each first projections 71a. Since the yield margin of the second projection 72a is smaller than the yield margin of the first projections 71a, the second projection 72a yields first, and the first projections 71a remain deformed elastically for some period of time. Note that the elastic member 7a may be arranged in the elastic member space 70 (see Fig. 1) of the coin-type secondary battery 1.

The coin-type secondary batteries 1 and 1a described above may include an elastic member that is different in structure from the elastic members 7 and 7a. Hereinafter, elastic members 7b to 7e that are different in structure from the elastic members 7 and 7a will be described.

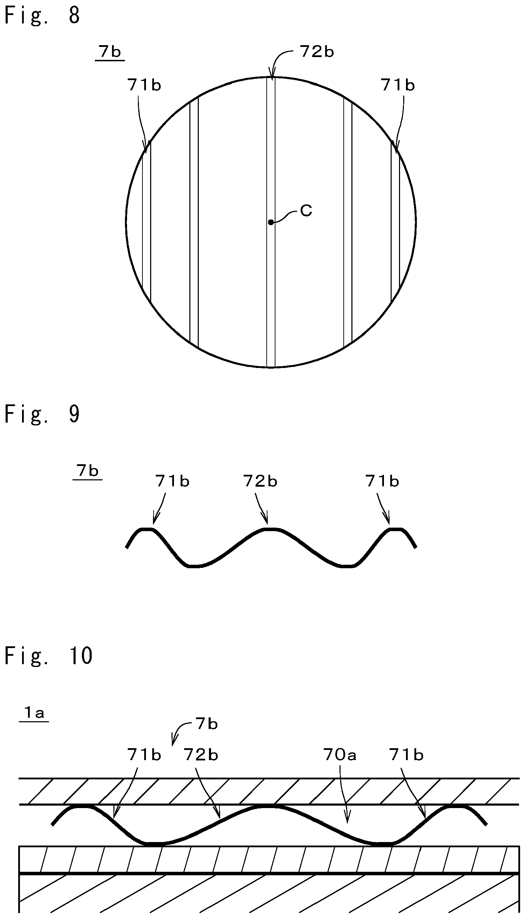

Figs. 8 and 9 are respectively a plan view and a sectional view of the elastic member 7b. Like the elastic member 7, the elastic member 7b is a generally circular flat spring in plan view. The elastic member 7b includes two first projections 71b and one second projection 72b. Like the first projections 71 described above, the two first projections 71b are located at both ends in the direction of arrangement (i.e., in the first radial direction described above). Like the second projection 72 described above, the second projection 72b is arranged in the center C of the elastic member 7b between the two first projections 71b. Each of the first projections 71b and the second projection 72b extends approximately linearly in the second radial direction described above (i.e., the direction approximately perpendicular to the direction of arrangement). The first projections 71b and the second projection 72b have approximately the same free height. The first projections 71b and the second projection 72b also have approximately the same plate thickness and approximately the same surface roughness.

In the elastic member 7b, the first projections 71b and the second projection 72b have different widths in the direction of arrangement (hereinafter, also simply referred to as the "width"), and the spring constant of the first projections 71b in the up-down direction is different from the spring constant of the second projection 72b. In the examples illustrated in Figs. 8 and 9, since the second projection 72b has a greater width than the first projections 71b, the spring constant of the second projection 72b is lower than the spring constant of the first projections 71b.

As illustrated in Fig. 10, when the elastic member 7b is arranged in the elastic member space 70a, which has an approximately constant height in the coin-type secondary battery 1a described above, the amount of vertical displacement of each first projection 71b is approximately the same as the amount of vertical displacement of the second projection 72b. Thus, the compressive stress acting in the up-down direction on the first projections 71b having a higher spring constant is greater than the compressive stress acting in the up-down direction on the second projection 72b having a lower spring constant. Accordingly, the yield margin of the second projection 72b is larger than the yield margin of the first projections 71b.

In this way, by using that elastic member 7b having a plurality of projections that include the first projections 71b and the second projection 72b that is different in yield margin from the first projections 71b, it is possible to shift the timing of yielding between the first projections 71b and the second projection 72b when the elastic member 7b yields due to factors such as a change of the coin-type secondary battery 1a over time. In the example described above, the first projections 71b yield first, and the second projection 72b remains deformed elastically for some period of time. As a result, it is possible to extend the life of the coin-type secondary battery 1a.

As described above, when the elastic member 7b is provided in the coin-type secondary battery 1a, it is possible to easily vary the yield margin of the second projection 72b and the yield margin of the first projection 71b because the first projection 71b and the second projection 72b are different in spring constant. As a result, it is possible to extend the life of the coin-type secondary battery 1a without excessively complicating the structure of the coin-type secondary battery 1a.

As described above, in the elastic member 7b, the difference in spring constant between the first projection 71b and the second projection 72b depends on the difference in width between the first projection 71b and the second projection 72b. Accordingly, it is possible to easily vary the spring constant of the first projection 71b and the spring constant of the second projection 72b.

Note that the elastic member 7b may be arranged in the elastic member space 70 that has a greater height in the radially central portion in the coin-type secondary battery 1 (see Fig. 1). In this case, the second projection 72b has a lower spring constant and a smaller amount of vertical displacement than the first projections 71b. Thus, the compressive stress acting in the up-down direction on the second projection 72b is smaller than the compressive stress acting in the up-down direction on the first projections 71b. Since the yield margin of the second projection 72b is larger than the yield margin of the first projections 71b, the first projections 71b yield first, and the second projection 72b remains deformed elastically for some period of time.

In the elastic member 7b, the width of the second projection 72b may be smaller than the width of each first projection 71b. In this case, the spring constant of the second projection 72b becomes higher than the spring constant of the first projections 71b. Accordingly, in the elastic member 7b that is housed in the elastic member space 70a (see Fig. 10) of the coin-type secondary battery 1a, the compressive stress acting in the up-down direction on the second projection 72b is greater than the compressive stress acting in the up-down direction on the first projections 71b. As a result, the yield margin of the second projection 72b becomes smaller than the yield margin of the first projections 71b, so that the second projection 72b yields first, and the first projections 71b remain deformed elastically for some period of time. Note that the elastic member 7b may be arranged in the elastic member space 70 (see Fig. 1) of the coin-type secondary battery 1.

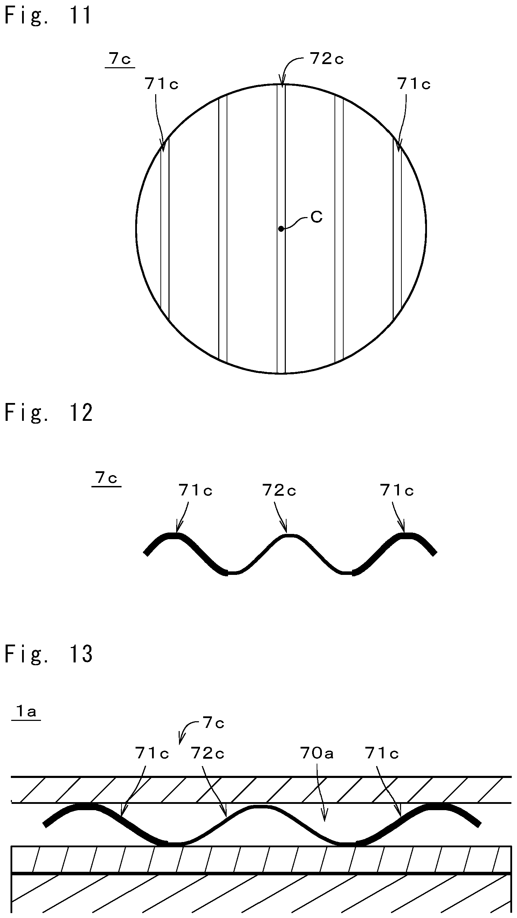

Figs. 11 and 12 are respectively a plan view and a sectional view of the elastic member 7c. Like the elastic member 7, the elastic member 7c is a generally circular flat spring in plan view. The elastic member 7c includes two first projections 71c and one second projection 72c. Like the first projections 71 described above, the two first projections 71c are located at both ends in the direction of arrangement (i.e., the first radial direction described above). Like the second projection 72 described above, the second projection 72c is arranged in the center C of the elastic member 7c between the two first projections 71c. Each of the first projections 71c and the second projection 72c extends approximately linearly in the second radial direction as described above (i.e., the direction approximately perpendicular to the direction of arrangement). The first projections 71c and the second projection 72c have approximately the same free height. The first projections 71c and the second projection 72c have approximately the same width in the direction of arrangement. The first projections 71c and the second projection 72c also have approximately the same surface roughness.

In the elastic member 7c, the first projections 71c and the second projection 72c have different plate thicknesses and therefore have different spring constants. In the example illustrated in Fig. 12, the second projection 72c has a smaller plate thickness than the first projections 71c, so that the second projection 72c has a lower spring constant than the first projections 71c.

As illustrated in Fig. 13, when the elastic member 7c is arranged in the elastic member space 70a that has approximately a constant height in the coin-type secondary battery 1a described above, the amount of vertical displacement of each first projection 71c is approximately the same as the amount of vertical displacement of the second projection 72c. Thus, the compressive stress acting in the up-down direction on the first projections 71c having a higher spring constant is greater than the compressive stress acting in the up-down direction on the second projection 72c having a lower spring constant. Accordingly, the yield margin of the second projection 72c is larger than the yield margin of the first projection 71c.

In this way, by using the elastic member 7c that includes a plurality of projections including the first projections 71c and the second projection 72c different in yield margin from the first projections 71c, it is possible to shift the timing of yielding between the first projections 71c and the second projection 72c when the elastic member 7c yields due to factors such as a change of the coin-type secondary battery 1a over time. In the example described above, the first projections 71c yield first, and the second projection 72c remains elastically deformed for some period of time. As a result, it is possible to extend the life of the coin-type secondary battery 1a.

As described above, when the elastic member 7c is provided in the coin-type secondary battery 1a, it is possible to easily vary the yield margin of the second projection 72c and the yield margin of the first projection 71c because the first projection 71c and the second projection 72c are different in spring constant from each other. As a result, it is possible to extend the life of the coin-type secondary battery 1a without excessively complicating the structure of the coin-type secondary battery 1a.

As described above, in the elastic member 7c, the difference in spring constant between the first projection 71c and the second projection 72c depends on the difference in plate thickness between the first projection 71c and the second projection 72c. Accordingly, it is possible to easily vary the spring constant of the first projection 71c and the spring constant of the second projection 72c.

Note that the elastic member 7c may be arranged in the elastic member space 70 that has a greater height in the radially central portion in the coin-type secondary battery 1 (see Fig. 1). In this case, the second projection 72c has a lower spring constant and a smaller amount of vertical displacement than the first projections 71c. Thus, the compressive stress acting in the up-down direction on the second projection 72c is smaller than the compressive stress acting in the up-down direction on the first projections 71c. Accordingly, since the yield margin of the second projection 72c is larger than the yield margin of the first projections 71c, the first projections 71c yield first, and the second projection 72c remains elastically deformed for some period of time.

In the elastic member 7c, the second projection 72c may have a plate thickness greater than the plate thickness of each first projection 71c. In this case, the spring constant of the second projection 72c is higher than the spring constant of the first projections 71c. Accordingly, in the elastic member 7c that is housed in the elastic member space 70a (see Fig. 13) of the coin-type secondary battery 1a, the compressive stress acting in the up-down direction on the second projection 72c is greater than the compressive stress acting in the up-down direction on the first projections 71c. As a result, the yield margin of the second projection 72c becomes smaller than the yield margin of the first projections 71c, so that the second projection 72c yields first, and the first projections 71c remain elastically deformed for some period of time. Note that the elastic member 7c may be arranged in the elastic member space 70 (see Fig. 1) of the coin-type secondary battery 1.

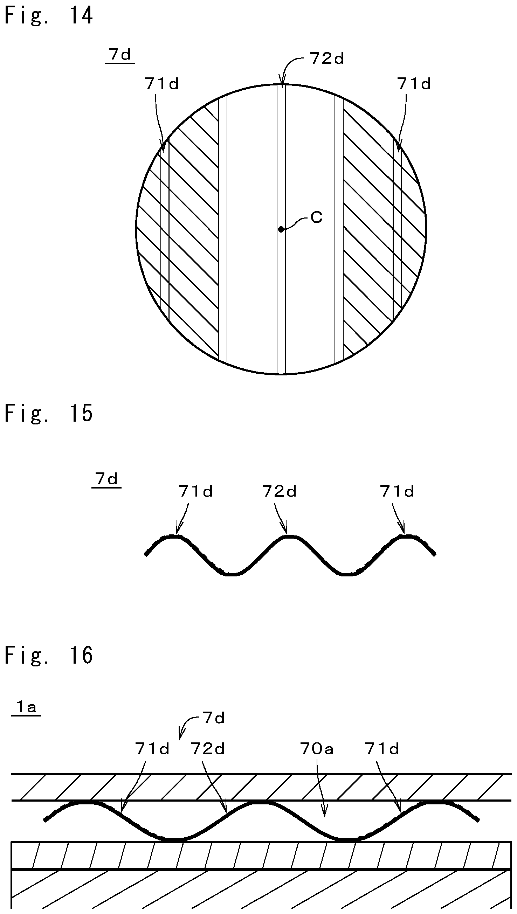

Figs. 14 and 15 are respectively a plan view and a sectional view of the elastic member 7d. Like the elastic member 7, the elastic member 7d is a generally circular flat spring in plan view. The elastic member 7d includes two first projections 71d and one second projection 72d. Like the first projections 71 described above, the two first projections 71d are arranged at both ends in the direction of arrangement (i.e., the first radial direction described above). Like the second projection 72 described above, the second projection 72d is arranged in the center C of the elastic member 7d between the two first projections 71d. Each of the first projections 71d and the second projection 72d extends approximately linearly in the second radial direction described above (i.e., the direction approximately perpendicular to the direction of arrangement). The first projections 71d and the second projection 72d have approximately the same free height. The first projections 71d and the second projection 72d have approximately the same width in the direction of arrangement. The first projections 71d and the second projection 72d also have approximately the same plate thickness.

In the elastic member 7d, the first projections 71d and the second projection 72d are different in surface roughness from each other. Thus, in cases such as where the coin-type secondary battery 1a is mounted on an object by reflow soldering or where thermal expansion occurs repeatedly in varying temperature environments, the amount of heat conducted from the outer case 5 (see Fig. 1) to the first projections 71d is different from the amount of heat conducted from the outer case 5 to the second projection 72d. Accordingly, the degree of reduction in Young's modulus caused by the heat conducted from the outer case 5 (i.e., heat input from the outer case 5) varies between the first projections 71d and the second projection 72d.

In the example illustrated in Figs. 14 and 15, the surface roughness of the first projections 71d is greater than the surface roughness of the second projection 72d. Thus, the amount of heat input to the second projection 72d is greater than the amount of heat input to the first projections 71d, and the Young's modulus of the second projection 72d decreases more considerably than the Young's modulus of the first projections 71d. Accordingly, the Young's modulus of the second projection 72d becomes lower than the Young's modulus of the first projection 71d. As a result, the spring constant of the second projection 72d becomes lower than the spring constant of the first projection 71d. In the illustration in Fig. 14, the first projections 71d with greater surface roughness is hatched diagonally, and in the illustration in Fig. 15, the surfaces (i.e., upper surfaces) of the first projections 71d are indicated by broken lines.

As illustrated in Fig. 16, when the elastic member 7d is arranged in the elastic member space 70a that has an approximately constant height in the coin-type secondary battery 1a describe above, the amount of vertical displacement of each first projection 71d is approximately the same as the amount of vertical displacement of the second projection 72d. Thus, the compressive stress acting in the up-down direction on the first projections 71d with a higher Young's modulus is greater than the compressive stress acting in the up-down direction on the second projection 72d with a lower Young's modulus. Accordingly, the yield margin of the second projection 72d is larger than the yield margin of the first projections 71d.

In this way, by using the elastic member 7d that includes a plurality of projections including the first projections 71d and the second projection 72d different in yield margin from the first projection 71d, it is possible to shift the timing of yielding between the first projections 71d and the second projection 72d when the elastic member 7d yields due to factors such as a change of the coin-type secondary battery 1a over time. In the example described above, the first projections 71d yield first, and the second projection 72d remains elastically deformed for some period of time. As a result, it is possible to extend the life of the coin-type secondary battery 1a.

As described above, when the elastic member 7d is provided in the coin-type secondary battery 1a, it is possible to easily vary the yield margin of the second projection 72d and the yield margin of the first projection 71d because the first projection 71d and the second projection 72d are different in Young's modulus from each other. As a result, it is possible to extend the life of the coin-type secondary battery 1a without excessively complicating the structure of the coin-type secondary battery 1a.

As described above, in the elastic member 7d, the difference in spring constant between the first projection 71d and the second projection 72d depends on the difference in Young's modulus between the first projection 71d and the second projection 72d, and the difference in Young's modulus between the first projection 71d and the second projection 72d depends on the difference in surface roughness between the first projection 71d and the second projection 72d. Accordingly, it is possible to easily vary the spring constant and Young's modulus of the first projection 71d and the spring constant and Young's modulus of the second projection 72d.

Note that the elastic member 7d may be arranged in the elastic member space 70 that has a greater height in the radially central portion in the coin-type secondary battery 1 (see Fig. 1). In this case, the second projection 72d has a lower spring constant and a smaller amount of vertical displacement than the first projections 71d. Thus, the compressive stress acting in the up-down direction on the second projection 72d is smaller than the compressive stress acting in the up-down direction on the first projections 71d. Accordingly, since the yield margin of the second projection 72d is larger than the yield margin of the first projection 71d, the first projections 71d yield first, and the second projection 72d remains elastically deformed for some period of time.

In the elastic member 7d, the surface roughness of the second projection 72d may be greater than the surface roughness of each first projection 71d. In this case, the Young's modulus of the second projection 72d is greater than the Young's modulus of the first projections 71d. As a result, the spring constant of the second projection 72d becomes higher than the spring constant of the first projections 71d. Accordingly, in the elastic member 7d that is housed in the elastic member space 70a (see Fig. 16) of the coin-type secondary battery 1a, the compressive stress acting in the up-down direction on the second projection 72d is greater than the compressive stress acting in the up-down direction on the first projections 71d. As a result, since the yield margin of the second projection 72d is smaller than the yield margin of the first projections 71d, the second projection 72d yield first and the first projections 71d remains elastically deformed for some period of time. Note that the elastic member 7d may be arranged in the elastic member space 70 (see Fig. 1) of the coin-type secondary battery 1.

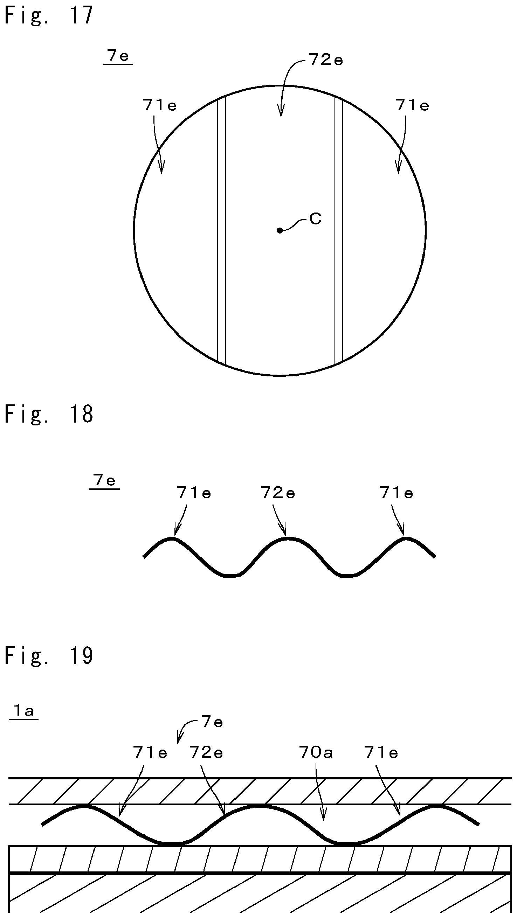

Figs. 17 and 18 are respectively a plan view and a sectional view of the elastic member 7e. Like the elastic member 7, the elastic member 7e is a generally circular flat spring in plan view. The elastic member 7e includes two first projections 71e and one second projection 72e. Like the first projections 71 described above, the two first projections 71e are located at both ends in the direction of arrangement (i.e., the first radial direction described above). Like the second projection 72 described above, the second projection 72e is arranged in the center C of the elastic member 7e between the two first projections 71e. Each of the first projections 71e and the second projection 72e extends approximately linearly in the second radial direction described above (i.e., the direction approximately perpendicular to the direction of arrangement). The first projections 71e and the second projection 72e have approximately the same free height. The first projections 71e and the second projection 72e have approximately the same width in the direction of arrangement. The first projections 71e and the second projection 72e also have approximately the same plate thickness and approximately the same surface roughness.

In the elastic member 7e, the first projections 71e and the second projection 72e do not have the flat portions 711 and 721 (see Figs. 2 and 3) at the tops (i.e., upper ends), and the curvature of the tops of the first projections 71e is different from the curvature of the top of the second projection 72e. Thus, the first projections 71e and the second projection 72e have different spring constants. In the following description, the curvatures of the tops of the first projections 71e and the second projection 72e are also simply referred to as "curvatures." In the example illustrated in Fig. 18, the curvature of the second projection 72e is smaller than the curvature of the first projections 71e (i.e., the second projection 72e has a greater curvature radius), so that the spring constant of the second projection 72e is lower than the spring constant of the first projections 71e.

As illustrated in Fig. 19, when the elastic member 7e is arranged in the elastic member space 70a that has an approximately constant height in the coin-type secondary battery 1a described above, the amount of vertical displacement of each first projection 71e is approximately the same as the amount of vertical displacement of the second projection 72e. Thus, the compressive stress acting in the up-down direction on the first projections 71e having a higher spring constant is greater than the compressive stress acting in the up-down direction on the second projection 72e having a lower spring constant. Accordingly, the yield margin of the second projection 72e is larger than the yield margin of the first projections 71e.

In this way, by using the elastic member 7e that includes a plurality of projections including the first projections 71e and the second projection 72e different in yield margin from the first projections 71e, it is possible to shift the timing of yielding between the first projections 71e and the second projection 72e when the elastic member 7e yields due to factors such as a change of the coin-type secondary battery 1a over time. In the example described above, the first projections 71e yield first, and the second projection 72e remains elastically deformed for some period of time. As a result, it is possible to extend the life of the coin-type secondary battery 1a.

As described above, when the elastic member 7e is provided in the coin-type secondary battery 1a, it is possible to easily vary the yield margin of the second projection 72e and the yield margin of the first projection 71e because the spring constant of the second projection 72e is different from the spring constant of the first projection 71e. As a result, it is possible to extend the life of the coin-type secondary battery 1a without excessively complicating the structure of the coin-type secondary battery 1a.

As described above, in the elastic member 7e, the difference in spring constant between the first projection 71e and the second projection 72e depends on the difference in curvature (i.e., curvature of the top) between the first projection 71e and the second projection 72e. Accordingly, it is possible to easily vary the spring constant of the first projection 71e and the spring constant of the second projection 72e.

Note that the elastic member 7e may be arranged in the elastic member space 70 that has a greater height in the radially central portion in the coin-type secondary battery 1 (see Fig. 1). In this case, the second projection 72e has a lower spring constant and a smaller amount of vertical displacement than the first projections 71e. Thus, the compressive stress acting in the up-down direction on the second projection 72e is smaller than the compressive stress acting in the up-down direction on the first projections 71e. Accordingly, since the yield margin of the second projection 72e is larger than the yield margin of the first projections 71e, the first projections 71e yield first, and the second projection 72e remains elastically deformed for some period of time.

In the elastic member 7e, the second projection 72e may have a greater curvature than the first projections 71e. In this case, the spring constant of the second projection 72e becomes higher than the spring constant of the first projections 71e. Accordingly, in the elastic member 7e that is housed in the elastic member space 70a (see Fig. 19) of the coin-type secondary battery 1a, the compressive stress acting in the up-down direction on the second projection 72e is greater than the compressive stress acting in the up-down direction on the first projections 71e. As a result, the yield margin of the second projection 72e becomes smaller than the yield margin of the first projections 71e, so that the second projection 72e yield first, and the first projections 71e remains elastically deformed for some period of time. Note that the elastic member 7e may be arranged in the elastic member space 70 (see Fig. 1) of the coin-type secondary battery 1.

The coin-type secondary batteries 1 and 1a described above may be modified in various ways.

For example, in the manufacture of the coin-type secondary battery 1, the elastic member 7 does not necessarily have to be welded to the flat plate portion 521 of the negative can 52 (or the flat plate portion 511 of the positive can 51), and the elastic member 7 and the negative can 52 (or the positive can 51) may be handled individually. The same applies to the coin-type secondary battery 1a and the elastic members 7a to 7e.

In the elastic member 7a, the second projection 72a does not necessarily have to be arranged in the central portion in the direction of arrangement, and for example, may be arranged at an end in the direction of arrangement. Moreover, the elastic member 7a may include three or more types of projections (including the first projections 71a and the second projection 72a) each having a different free height, and these three or more types of projections may be arranged in, for example, ascending/descending order of the free height from one end to the other end in the direction of arrangement. The elastic member 7b may also include three or more types of projections each having a different width, and these three or more types of projections may be arranged in, for example, ascending/descending order of the width in the direction of arrangement. The elastic member 7c may also include three or more types of projections each having a different plate thickness, and these three or more types of projections may be arranged in, for example, ascending/descending order of the plate thickness in the direction of arrangement. The elastic member 7d may also include three or more types of projections each having different surface roughness, and these three or more types of projections may be arranged in, for example, ascending/descending order of the surface roughness in the direction of arrangement. The elastic member 7e may also include three or more types of projections each having a different curvature at the top, and these three or more types of projections may be arranged in, for example, ascending/descending order of the curvature in the direction of arrangement.

In the elastic member 7, the first projections 71 and the second projection 72 do not necessarily have to extend in the direction perpendicular to the direction of arrangement, and do not also necessarily have to be arranged in the direction of arrangement. In other words, the elastic member 7 does not necessarily have to be of a corrugated plate shape. For example, each of the first projection 71 and the second projection 72 may be configured of a large number of dotted embossing elements (i.e., protrusions) that are formed by embossing. The same applies to the elastic members 7a to 7e.

The shapes of the elastic members 7 and 7a to 7e in plan view are not limited to approximately circular shapes, and may be modified in various ways. For example, the elastic members 7 and 7a to 7e may have an approximately rectangular shape in plan view, or may have an approximately circular ring shape in plan view.

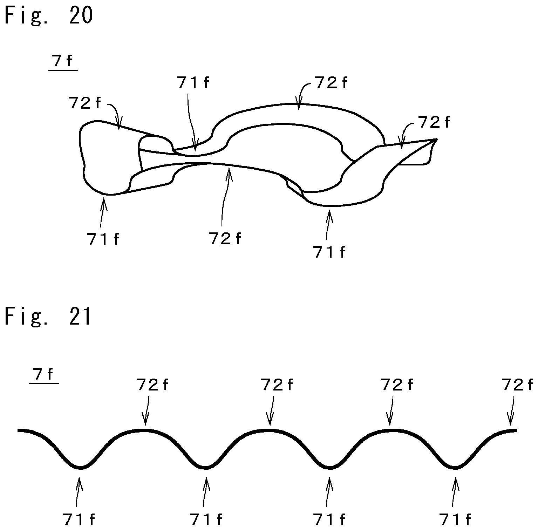

Fig. 20 is a perspective view of an elastic member 7f that is an approximately circular ring-shaped flat spring in plan view. Fig. 21 illustrates the height of the elastic member 7f at each circumferential position by extending the circumferential position of the elastic member 7f linearly in the right-left direction of the drawing. The elastic member 7f includes a plurality of first projections 71f that project downward, and a plurality of second projections 72f that project upward. In the examples illustrated in Figs. 20 and 21, four first projections 71f and four second projections 72f are alternately arranged in the circumferential direction. The elastic member 7f is a ring-shaped spring that is waved in the circumferential direction (a so-called waved washer).

In the elastic member 7f, the curvature of the tops (i.e., lower ends) of the first projections 71f is greater than the curvature of the tops (i.e., upper ends) of the second projections 72f (i.e., the curvature radius is small). Thus, the spring constant of the second projections 72f becomes lower than the spring constant of the first projections 71f. When the elastic member 7f is arranged in the elastic member spaces 70 and 70a (see Figs. 4 and 5) of the coin-type secondary batteries 1 and 1a described above, the amount of vertical displacement of each first projection 71f is approximately the same as the amount of vertical displacement of each second projection 72f. Thus, the compressive stress acting in the up-down direction on the first projections 71f having a higher spring constant is greater than the compressive stress acting in the up-down direction on the second projections 72f having a lower spring constant. Accordingly, since the yield margin of the second projections 72f becomes larger than the yield margin of the first projections 71f, the first projections 71f yield first, and the second projections 72f remain elastically deformed for some period of time. As a result, it is possible to extend the lives of the coin-type secondary batteries 1 and 1a.

Each of the positive electrode 2 and the negative electrode 3 does not necessarily have to be a sintered plate electrode, and may, for example, be a coating electrode in which an active material layer including an active material and a binder is coated on a current collector.

The constitutions of the above-described preferred embodiments and the variations may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

### Industrial Applicability

The coin-type secondary battery according to the present invention is applicable in various fields using coin-type secondary batteries, such as a battery electrically connected to and mounted on an object such as a wiring board.

### Reference Signs List

- 1, 1a: Coin-type secondary battery
- 2: Positive electrode
- 3: Negative electrode
- 4: Electrolyte layer
- 5: Outer case
- 7, 7a to 7f: Elastic member
- 71, 71a to 71f: First projection
- 72, 72a to 72f: Second projection
- 511, 521, 521a: Flat plate portion
- 711, 721: Flat portion

## Claims

1. A coin-type secondary battery comprising:
a positive electrode and a negative electrode that are arranged in an up-down direction;
an electrolyte layer provided between said positive electrode and said negative electrode;
an outer case having an enclosed space that houses said positive electrode, said negative electrode, and said electrolyte layer; and
a conductive elastic member that is arranged, while being compressed in the up-down direction, between one electrode out of said positive electrode and said negative electrode and a flat plate portion of said outer case and that provides a direct or indirect electrical connection between said one electrode and said flat plate portion,
wherein said elastic member includes a plurality of projections that project in the up-down direction, and
said plurality of projections includes:
a first projection; and
a second projection that is different in yield margin from said first projection, the yield margin being a difference between compressive stress and yield stress that act in the up-down direction.

2. The coin-type secondary battery according to claim 1, wherein
wherein said first projection and said second projection are different in an amount of vertical displacement from each other, the amount of vertical displacement being an amount of displacement in the up-down direction caused by compression between said one electrode and said flat plate portion.

3. The coin-type secondary battery according to claim 1, wherein
said first projection and said second projection are different in spring constant in the up-down direction from each other.

4. The coin-type secondary battery according to claim 3, wherein
a difference in said spring constant between said first projection and said second projection depends on a difference in width between said first projection and said second projection.

5. The coin-type secondary battery according to claim 3, wherein
a difference in said spring constant between said first projection and said second projection depends on a difference in plate thickness between said first projection and said second projection.

6. The coin-type secondary battery according to claim 3, wherein
a difference in said spring constant between said first projection and said second projection depends on a difference in Young's modulus between said first projection and said second projection, and
said difference in Young's modulus between said first projection and said second projection depends on a difference in surface roughness between said first projection and said second projection.

7. The coin-type secondary battery according to claim 3, wherein
a difference in said spring constant between said first projection and said second projection depends on a difference in curvature between said first projection and said second projection.

8. The coin-type secondary battery according to any one of claims 1 to 7, wherein
said plurality of projections include three or more projections arranged in a predetermined direction of arrangement that is parallel to one radial direction, and
either one of said first projection and said second projection that has a larger yield margin is a projection other than projections that are located at both ends in said direction of arrangement among said plurality of projections.

9. The coin-type secondary battery according to any one of claims 1 to 8, wherein
said plurality of projections are arranged in a predetermined direction of arrangement that is parallel to one radial direction, and
each of said plurality of projections extends linearly in a direction perpendicular to said direction of arrangement.

10. The coin-type secondary battery according to any one of claims 1 to 9, wherein
at least one of said plurality of projections has a flat portion at the top, said flat portion being perpendicular to the up-down direction and welded to said flat plate portion.

11. The coin-type secondary battery according to any one of claims 1 to 10, wherein
said plurality of projections have the same height while being in a free state.
